# EUROPÄISCHE PATENTSCHRIFT

(11) **EP 1 935 479 B1**
(45) Veröffentlichungstag und Bekanntmachung des Hinweises auf die Patenterteilung: **30.09.2009**
(21) Anmeldenummer: 07024652.5
(22) Anmeldetag: 19.12.2007
(51) Int. Cl.: B01D 61/04, C02F 1/44, C02F 1/78, C02F 1/28, C02F 103/08

(54) **Hybridprozess zur Meerwasserentsalzung**
Hybrid process for saltwater desalination
Procédé hybride destiné à la désalinisation de l'eau de mer

(30) Priorität: 21.12.2006 DE 102006060592
(43) Veröffentlichungstag der Anmeldung: 25.06.2008
(73) Patentinhaber: Chmiel, Horst, 80689 München (DE)
(72) Erfinder: Chmiel, Horst, 80689 München (DE)

(56) Entgegenhaltungen:
- WO-A-20/05051849
- WO-A-20/05092799
- US-A- 6 030 535
- US-A1- 2006 175 256
- VAN HOOF S C J M ET AL: "Dead-end ultrafiltration as alternative pre-treatment to reverse osmosis in seawater desalination: a case study" DESALINATION, ELSEVIER, AMSTERDAM, NL, Bd. 139, Nr. 1-3, 20. September 2001 (2001-09-20), Seiten 161-168, XP004320382 ISSN: 0011-9164

## Beschreibung

Die Erfindung betrifft ein Verfahren und eine Vorrichtung zur Entsalzung von Meerwasser und anderer salzhaltiger Oberflächenwässer (z.B. Brackwasser) mittels eines Membranhybridprozesses.

Das zu entsalzende Meerwasser bzw. salzhaltige Oberflächenwasser enthält neben dem gelösten anorganischen Salz - in der Regel vor allem Kochsalz - suspendierte Feststoffe und organische Stoffe.

Für die Entsalzung im industriellen Maßstab hat sich neben anderen Verfahren ( z. B. der Verdampfung ) die Umkehrosmose durchgesetzt.
Die Umkehrosmose (RO) ist ein Membrantrennverfahren, das nach dem Prinzip der Löslichkeit und Diffusion selektiert. Das eigentliche Trennelement ist eine dünne Membranfolie, in der sich die verschiedenen Komponenten einer Lösung unterschiedlich gut lösen bzw. durch die Polymermatrix hindurch diffundieren. Definitionsgemäß werden Moleküle > 200 Dalton praktisch vollständig von der Membran zurück gehalten. Häufig ist die Trenngrenze noch niedriger (< 100 Dalton). RO-Membranen bestehen aus Polymeren, wie z.B. Polyamiden.

Für technische Anwendungen ist die Membran in einem Apparat integriert, dem so genannten Modul. Für die Umkehrosmose werden bevorzugt Wickelmodule verwendet. Der Name rührt daher, dass beiderseits der Membran ein Stützgewebe gelegt wird und mehrere solche Sandwich gewickelt werden. Der durch das Stützgewebe gebildete Abstand zwischen zwei Membranen ist sehr gering. Das birgt die Gefahr, dass der Kanal auf der Feedseite, also auf der Seite auf der die zu entsalzende Flüssigkeit zugegeben wird, verstopft. Deshalb wird der RO üblicher Weise eine Mikrofiltration (MF) vorgeschaltet, um Schwebstoffe zu entfernen.

Meerwasser und andere salzhaltige Oberflächenwässer enthalten aber auch organische Substanzen. Diese passieren die Mikrofiltrationsmembran und lagern sich auf der Feedseite der RO-Membran an. Dieses als Membranfouling bekannte Phänomen führt zu einem stetigen Absinken des Permeatflusses durch die Membran, was die Wirtschaftlichkeit des Prozesses stark reduziert. Aus diesem Grund muss der Filtrationsprozess in regelmäßigen Abständen abgebrochen und die RO-Membran mit Chemikalien gereinigt werden.

In der Literatur werden verschiedene Methoden zur Verminderung des Membranfoulings vorgeschlagen ( z.B. in Bioprozesstechnik, Verlag Elsevier 2006 ). Der häufigste Vorschlag ist, die Strömungsgeschwindigkeit stark zu erhöhen, um die Ablagerungen zu reduzieren. Dies wird allerdings mit einem hohen Energieaufwand erkauft.
Da bereits der erste Schritt des Foulings - die Adsorption von organischen Substanzen auf der Membranoberfläche - eine negative Wirkung auf den Permeatfluss hat, wird im Patent WO 2006/030081 A1 vorgeschlagen, die Membranoberfläche durch chemische Modifizierung zu hydrophilisieren und auf diese Weise die Adsorption von Biomolekülen zu reduzieren. Allerdings ändert man damit auch das Trennverhalten der Membran.
Weiterhin ist bekannt, der Umkehrosmosemembran eine Mikrofiltrations-oder Ultrafiltrationsmembran vorzuschalten, wie etwa in der WO 2005/092799 A1 beschrieben wird.
Alternativ wird vorgeschlagen (z.B. Schlichter et al. Desalination 168 (307-317) 2004) das Membranfouling durch Zugabe von Ozon zu verhindern. Bis heute gibt es allerdings keine Umkehrosmosemembran die gegenüber Ozon stabil bleibt. Vielmehr zerstören im Langzeiteinsatz bereits geringe Mengen Ozon die Polymermatrix der RO-Membran.
Die beste Lösung wäre daher, zu verhindern, dass organische Stoffe in den Umkehrosmosemodul eintreten. Das hätte den weiteren Vorteil, dass das von der Umkehrosmosemembran zurückgehaltene Salz keine organischen Verunreinigungen enthält und daher als weiteres Produkt (bei Meerwasser z.B. Kochsalz) verwertet werden kann.

Der Erfindung liegt somit die Aufgabe zu Grunde, die salzhaltige Lösung bei minimalem Ozonverbrauch vollständig von organischen Stoffen zu befreien, bevor sie in den RO-Modul eintritt.
Die Aufgabe wird erfindungsgemäß dadurch gelöst, dass dem Meerwasser bzw. salzhaltigen Oberflächenwasser, nachdem es mittels Filter oder Mikrofiltrationsmembran von partikulären Stoffen befreit wurde, Ozon zugemischt wird und es anschließend unmittelbar einem Ultrafiltrationsmodul zugeführt wird; denn im Gegensatz zur RO-Membran gibt es Ultrafiltrationsmembranen, die Ozon stabil sind.
Die Ultrafiltrationsmembran (UF) hat Poren mit mittleren Durchmessern zwischen 5 nm und 80 nm, abhängig von dem Molekulargewicht der organischen Hauptkomponenten.

Die mittleren Porendurchmesser werden üblicher Weise mittels wässriger Lösungen mit definierten Molekülen aus einer homologen Reihe (z.B. Alkane, Dextrane etc.) bestimmt. Leider haben Meerwasser und andere salzhaltige Oberflächenwässer ein breites Spektrum von organischen Molekülen von denen die kleinen, wie z.B. Huminsäuren 5 nm Poren passieren können. Diese kleinen organischen Moleküle liegen zwar in der Regel in geringer Menge vor, adsorbieren aber umso heftiger an der nach geschalteten RO-Membran. Würde man statt der Ultrafiltration eine Nanofiltration wählen, so könnte man damit zwar die gesamte Organik aus der salzhaltigen Lösung zurückhalten, aber das Ganze würde wegen der geringen Permeabilität (Permeatfluss in 1/m²h bar) unwirtschaftlich.
In WO 97/03926 A2 wird daher vorgeschlagen, dem salzhaltigen Rohwasser nach einer dreistufigen Filtration (Sand-, Aktivkohle- und Kerzenfilter) Ozon in so großer Menge zuzumischen, dass die gesamte im Rohwasser enthaltene organische Fracht umgewandelt, d.h. mineralisiert wird. Der nach geschaltete ultrafeine Filter hat dann nur noch eine Sicherheitsfunktion ("Polizeifilter").
Auch in DE 698 28 821 T2 bzw. EP 1 044 928 B1 wird vorgeschlagen, dem Rohwasser mindestens soviel Ozon zuzugeben, dass die gesamte organische Fracht chemisch umgewandelt wird. Man empfiehlt sogar eine Überdosierung zwischen 0,05 und 0,3 mg/l.

Die vorliegende Patentanmeldung will diesen hohen Ozonverbrauch vermeiden.
Es konnte experimentell gezeigt werden, dass man alle organischen Bestandteile aus einer salzhaltigen Lösung entfernen kann, d.h. dass nur die Salzlösung in die Umkehrosmose eintritt, wenn man nach der Partikelfiltration (Filter oder Mirkofiltration) dem Meerwasser oder salzhaltigen Oberflächenwasser sehr geringe Mengen Ozon zumischt und es anschließend über eine keramische UF-Membran filtriert. Die dazu benötigte Menge an Ozon beträgt ca. 0,3mg Ozon/mg TOC (Total Organic Carbon) für keramische Membranen, deren selektive Schicht aus Titanoxid besteht und 0,5 mg Ozon/mg TOC für selektive Schichten aus Aluminiumoxid. Damit können keinesfalls die insgesamt in der salzhaltigen Lösung vorhandenen organischen Moleküle oxidiert werden. Die einzige Erklärung für dieses Phänomen ist, dass das in der Lösung vorhandene Ozon sich in den Poren der keramischen Membran anlagert und nur diejenigen organischen Moleküle in der wässrigen Salzlösung oxidiert, die die Pore passieren. Das sind aber die kleinen organischen Moleküle (wie z.B. Huminsäure), während die großen organischen Moleküle von der Membran zurück gehalten werden. Offensichtlich hat dabei die sehr große innere Oberfläche der Poren Bedeutung. Außerdem scheinen katalytische Effekte eine Rolle zu spielen.
Des weiteren wurde gefunden, dass dead end, d.h. senkrecht zur Membran filtriert werden kann, was gegenüber der tangentialen Anströmung einer Membran (cross flow) eine erhebliche Energieersparnis bedeutet. In diesem Fall sollte das Gemisch aus Meerwasser bzw. salzhaltigem Oberflächenwasser plus Ozon unmittelbar unterhalb des Membranmoduls eingebracht werden, damit eine geringe Anströmung der Membran erfolgt und es sollte die Membran in regelmäßigen Abständen (z.B. alle 2 Stunden) mit Permeat rückgespült werden.

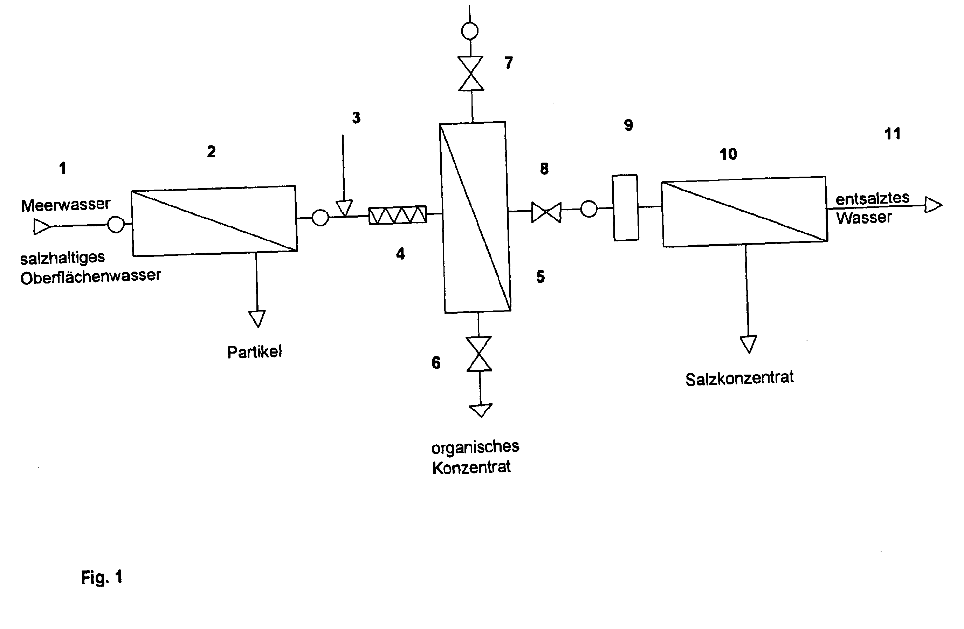

Das Erfindungsgemäße Verfahren ist in Fig. 1 schematisch dargestellt.
Meerwasser bzw. salzhaltiges Oberflächenwasser 1 wird im Filter bzw. MF-Modul 2 von Partikeln befreit. Über die Ozon-Dosierstation 3 wird im Mischer 4 Ozon zugemischt. Im UF-Modul 5 werden die organischen Moleküle zurück gehalten bzw. abgetrennt und in regelmäßigen Abständen über Ventil 6 ausgetragen., während die kleineren Moleküle in der Membran oxidiert werden. Die zyklische Rückspülung der anorganischen UF-Membran kann durch Öffnen von Ventil 7 damit synchronisiert werden. Während dieses Spülvorgangs ist das Ventil 8 geschlossen. Um zu verhindern, dass UF-Permeat noch freies Rest-Ozon enthält, das die RO-Membran schädigen würde, ist es vorteilhaft das Permeat des UF-Moduls noch durch einen Aktivkohlefilter 9 zu leiten. Eventuell noch vorhandenes Ozon würde von Aktivkohle zu Sauerstoff umgewandelt.
In den RO-Modul 10 tritt nur noch organ- und ozonfreie Salzlösung. Das durch die RO-Membran tretende Permeat 11 ist das gewünschte entsalzte Wasser. Das Retentat ist eine konzentrierte und von organischen Verunreinigung freie Salzlösung aus der z.B. Kochsalz gewonnen werden kann.

## Patentansprüche

1. Verfahren zur Entsalzung von Meerwasser und anderen salzhaltigen Wässern mittels Umkehrosmose, bei welchem der zu entsalzenden Lösung, bevor sie der Umkehrosmose zugeht, Ozon zugemischt wird und dieses Gemisch über eine keramische Ultrafiltrationsmembran im Dead-End-Modus und anschließend über einen Adsorber geleitet wird, **dadurch gekennzeichnet, dass** das Gemisch aus salzhaltigem Wasser und Ozon unmittelbar unterhalb der Ultrafiltrationsmembran eingebracht wird.

2. Verfahren nach Anspruch 1 **dadurch gekennzeichnet, dass** die Ultrafiltrationsmembran zyklisch mit Permeat rückgespült wird.

3. Vorrichtung zur Entsalzung von Meerwasser und anderen salzhaltigen Wässern mittels Umkehrosmose **dadurch gekennzeichnet, dass** dem Umkehrosmosemodul eine Anordnung bestehend aus Ozonmischer, keramischer Ultrafiltrationsmembran und Adsorber vorgeschaltet ist, wobei zur Erwirkung einer geringen Anströmung der Ultrafiltrationsmembran der Ozonmischer unmittelbar unterhalb der Ultrafiltrationsmembran angeordnet ist.

4. Vorrichtung nach Anspruch 3 **dadurch gekennzeichnet, dass** die selektive Schicht der keramischen Illtrafiltrationsmembran aus Titanoxid besteht.

5. Vorrichtung nach Anspruch 3 **dadurch gekennzeichnet, dass** die Ultrafiltrationsmembran eine keramische Flachmembran ist.

## Claims

1. A process for the desalination of sea water and other types of saline water using reverse osmosis, in which case ozone is added, prior to reverse osmosis, to the solution intended for desalination and this mixture is routed over a ceramic ultrafiltration membrane in the dead-end filtration mode and then through an adorber, **characterised in that** the mixture consisting of saline water and ozone is input directly under the ultrafiltration membrane.

2. A process according to Claim 1 **characterised in that** the ultrafiltration membrane undergoes cyclic backflushing with permeate.

3. An apparatus for the desalination of sea water and other types of saline water using reverse osmosis **characterised in that** a combination consisting of an ozone mixing apparatus, a ceramic ultrafiltration membrane and an adsorber is placed upstream of the reverse osmosis module in which case the ozone mixing apparatus is placed directly under the ultrafiltration membrane in order to apply a slight flow over the ultrafiltration membrane.

4. An apparatus according to Claim 3 **characterised in that** the selective layer of the ceramic ultrafiltration membrane is made of titanium oxide.

5. An apparatus according to Claim 3 **characterised in that** the ultrafiltration membrane is a ceramic flat-sheet membrane.

## Revendications

1. Procédé pour la désalinisation d'eau de mer et autres eaux salines par osmose inverse dans lequel de l'ozone est ajouté à la solution saline avant qu'elle soit traitée par osmose inverse, ce mélange étant ensuite dirigé sur une membrane d'ultrafiltration céramique en mode dead-end et ensuite sur un adsorbant avec la **particularité** que le mélange eau saline et ozone pénètre dans le système immédiatement en-dessous de la membrane d'ultrafiltration.

2. Procédé selon revendication 1 avec la **particularité** que la membrane d'ultrafiltration est rincée cycliquement avec du perméat.

3. Installation de désalinisation d'eau de mer et autres eaux salines par osmose inverse avec la **particularité** qu'une disposition comprenant un mélangeur d'ozone, une membrane d'ultrafiltration céramique et un adsorbant précède le module d'osmose inverse, disposition placée immédiatement en-dessous de la membrane d'ultrafiltration pour obtenir un moindre flux sur la membrane d'ultrafiltration.

4. Installation selon revendication 3 avec la **particularité** que la couche sélective de la membrane d'ultrafiltration céramique est en oxide de titane.

5. Installation selon revendication 3 avec la **particularité** que la membrane d'ultrafiltration est une membrane céramique plane.
